# EUROPEAN PATENT APPLICATION

(11) **EP 4 458 994 A1**
(43) Date of publication of application: **06.11.2024**
(21) Application number: 23189599.6
(22) Date of filing: 03.08.2023
(51) Int. Cl.: C22B 1/16, C22B 5/10, C22B 5/16, C22B 7/02, C22B 19/02, C22B 19/34

(54) **PROCESS FOR THE PRODUCTION OF ZINC OXIDE CONCENTRATE AND IRON ECOSINTER FROM STEELMAKING WASTES AND PRODUCT OBTAINED BY SUCH PROCESS**

(30) Priority: 03.05.2023 BR 102023008485
(71) Applicant: Dias de Souza, Adelson, 30493-180 Belo Horizonte Minas Gerais (BR)
(72) Inventor: LINHARES, Juarez, Belo Horizonte (BR); MACHADO MENDES SOUZA, Tasso, 30493-180 Belo Horizonte (BR)
(74) Representative: Linage González, Rafael

(57) **Abstract**

Process for the production of products in the form of commercial zinc oxide and iron ecosinter, which are important raw materials for the production of SHG zinc (a special quality product) and pig iron, with subsequent obtaining steel. The process for producing zinc oxide concentrate and iron ecosinter uses as raw material zinc ferrite residues, steelmaking co-products such as light mud, heavy mud, iron scale, pre-lime and yard cleaning materials rich in iron and, mainly, steel mill dust (class I) mixed with carbon sources, whose mixture is homogenized and pelletized, followed by reduction in a pot furnace fed by insufflated air in ascending flow with temperature ranging from 850°C to 1,300 °C; being the volatilized metals and the gases generated sent to a cyclone and bag filter where the zinc oxide is retained; the iron ecosinter is poured from the pot at the end of the process.

## Description

### Application field

The products generated by the process according to the invention in the form of commercial zinc oxide concentrates and iron ecosinter are important raw materials for the production of SHG zinc (special quality product) and alloys as well as pig iron, with subsequent obtaining of the steel.

### State of the technique

The prior art teaches some recovery processes of zinc oxide or other metals from industrial waste from blast furnaces or sludge or powders containing such metals and/or oxides.

The invention CN105296694B refers to a technology that treats various types of industrial powder material directly in the cast iron chute of the blast furnace. The raw materials are blast furnace dust (or slurry), gravitational dust collection dust, sintering machine dust collection dust, converter dust collection dust (or slurry), steelmaking slag powder steel, oxidized iron flakes, reduced iron dust, carbon-containing coal dust reducers, coke dust, etc. which are mixed, and transformed into pellets, and are added to the cast iron trough of the blast furnace. Zinc is recovered by iron enrichment and/or dezincification. That is, it does not resemble anything according to the present invention since it is carried out in the chute of the blast furnace itself.

Document WO2019071789A1 deals with the recovery of zinc, copper, iron, lead, bismuth, indium in copper-rich phases in zinc smelting in a thermal insulation apparatus or a reaction apparatus, allowing the slag to flow out and adding one or more lead slag, blast furnace slag, steel slag and ferroalloy slag to form mixed smelter slag; to obtain iron-containing silicate mineral phases, copper-rich phases, iron-rich phases and fumes containing zinc, lead, bismuth and indium components, performing recycling in all phases. Therefore, it also does not deal with EAF dust and co-products, so the process is completely different from the present invention.

Document CN101935765B deals with a zinc production process using natural gas and pure oxygen to replace coal dust, coke granules and similar materials. It argues to be a clean and less polluting production process that benefits environmental protection. This process differs completely from the present invention because it does not use coal or coke as reducers, like this invention.

The invention CN110453090A deals with a system and method for recovering zinc oxide from EAF powder slurry containing zinc from a steel plant using the electric furnace method. Which is not related from the present invention where the recovery of zinc oxide from EAF dust does not use the electric furnace at any time.

Anyway, most of the documents are related to steel mill wastes as alternatives to the Waelz process, but it does not deal with an economical and effective way to obtain commercial zinc oxide concentrates and fully recyclable iron sinter in the steelmakers.

### Objectives of the invention

In this sense, the objective was to develop a process capable of transforming the waste or by-products generated from steel mills into high-value added products, with low energy consumption and without the need for large investments, thus reducing the high costs of licensed special freight for transporting the steel mill waste to Waelz Furnace facilities. The focus of the new technology, according to the invention, also includes the environmental aspect of significantly contributing to the decarbonization of the industry by utilizing renewable carbon sources such as coal dust and predominantly charcoal.

### Troubleshooting and unusual effect

The technique is innovative as it makes it possible to treat EAF dust with a low zinc content, between 8% and 22% zinc, as well as steelmaking co-products (light mud, heavy mud, scale, pre-lime, in addition to cleaning materials also rich in iron) whereas the more usual Waelz furnace technology only treats steel mill dust above 16% zinc and does not treat the steelmaking co-products or produce the ecosinter, but Waelz generates a class II iron waste, that is still held in landfills or sent to paid special waste storage facilities.

This new technology makes it possible to drastically reduce carbon emissions, or decarbonization of the industry, since the EAF dust, a material classified as hazardous (class I), can be treated at the place of generation or in the vicinity. This is because the proposed technology makes it possible to operate in local installations, not needing to transport the EAF dust by means of special freight, with environmentally licensed routes, with risk, over hundreds to thousands of kilometers to large installations of Waelz Furnaces.

The Waelz technology most used today to treat EAF dust has significant disadvantages. One of them is the limitation of zinc contents contained in residues and powders from steelmaking, which must be at least 16% zinc, due to the thermal and economic balance to the specific consumption of carbon to turn zinc recovery economically viable. The Waelz Process also does not treat steelmaking co-products such as light mud, heavy mud, iron scale, pre-lime, in addition to yard cleaning of materials that are also rich in iron, which compositions are found in table 3. Another requirement of the Waelz Process is that it requires large scale production to become economically viable. Often, Steelmakers need to pay for its transport and treatment cost of EAF dust treatment to the Waelz Operators. From the environmental point of view, there are also carbon emissions with fuel for traveling long distances with material low in zinc. Added to these disadvantages is the need for Waelz furnace treatment companies to incur, in general, expenses for the disposal of iron slag waste, waste classified as class II, not inert.

With the present invention, the produced iron ecosinter is a commercial product widely used for obtaining pig iron. This is because this generated ecosinter product confers optimal basicity, reducing the addition of fluxes in the load fed to the blast furnace, thus closing the cycle with the production of steel that generated the EAF dust and co-products by steelmakings.

### Brief description of the figure

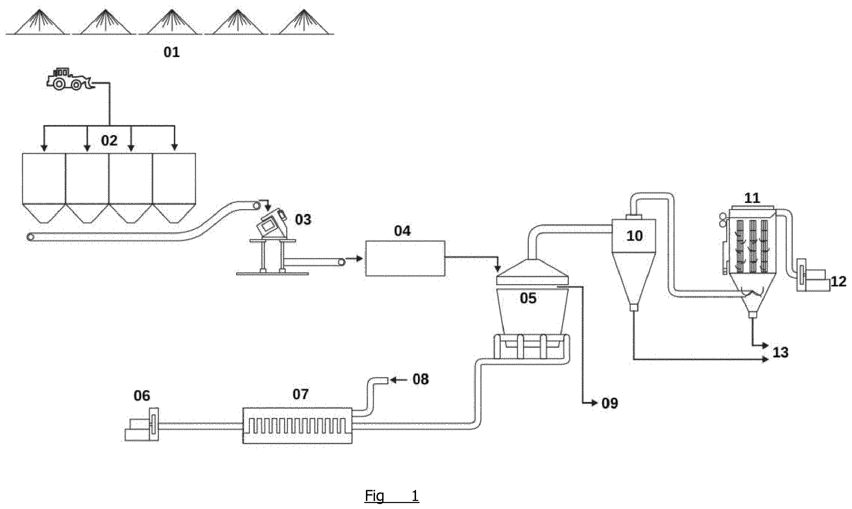

Figure 1, attached, shows the process flowsheet to produce commercial Zinc Oxide Concentrate and Iron EcoSinter.

### Short description

The present invention describes a process for the production of zinc oxide concentrate and iron ecosinter, which uses zinc ferrites as raw material, Electrical Arc Furnace (EAF) dust and co-products from steelmaking such as light slurry, heavy mud, iron scale, pre-lime, in addition to yard cleaning of materials also rich in iron, mixed with carbon sources and whose mixture is homogenized and pelletized, followed by reduction in a pot furnace by insufflated air in ascending flow with temperature ranging from 850°C to 1,300°C. The volatilized metals and the gases generated go to the cyclone and bag filter where the zinc oxide is retained. The ecosinter obtained after mixing with steelmaking co-products is poured from the bottom of the furnace.

### Detailed description

The present invention describes a process for transforming zinc ferrite waste (class I waste), steelmaking co-products (light mud, heavy mud, iron scale, pre-lime, in addition to cleaning yards of materials that are also rich in iron), EAF dust and low zinc powder pastes into commercial zinc oxide concentrates for the zinc industry, as well as ecosinter for the steel industry.

Based on pilot tests, it was possible to obtain a production route for commercial zinc oxide concentrates and ecosinter, from steelmaking wastes, with elimination and re-disposal of its heavy metal content. The invention reveals important results for reducing expenses and risks with the disposal of these residues or the need to transport them to Waelz Operators, in general, very far to the steelmaking industries. In addition, the process according to the invention does not require large scale treatment of EAF dust and steelmaking co-products. The present invention reverses carbon emissions, by eliminating transport over long distances and unfeasible treatment of waste with low zinc content and co-products from steelmaking to the large Waelz Operators, by obtaining products with high added value.

The process according to the invention, shown in Figure 1, basically represents a pyrometallurgical treatment in a reductor environment (fuming process) using mainly zinc ferrites, EAF dust and steelmaking co-products, such as mud light, heavy mud, iron scale, pre-lime, as well as yard cleaning of materials that are also rich in iron. Its differential is the reduction of carbon emissions in relation to the usual Waelz treatment process, as well as being used for low grades of zinc contained in EAF dust, co-products and steelmaking paste. EAF dust and sludge contain zinc because both come from raw materials of steel galvanized with this metal. Due to this invention, large Waelz Kilns no longer are necessary, which is the best-known technology in the world to treat EAF dust with high zinc content. But this new technology uses production modules with adaptable capacities according to the demands of the steelmakers, which can be installed directly at these generation sites or in their vicinity, with a significant reduction in operating costs, reduction of special freight for the transport of steelmakers, representing a drastic reduction of carbon emissions, decarbonization of the industry, and greenhouse effect in the current transportation of low-grade raw materials.

The new technology makes it possible to produce iron ecosinter at the place of consumption or for the steel market, because it is result of mix with iron ores and steelmaking co-products such as light mud, heavy mud, iron scale, pre-lime, in addition to yard cleaning of materials that are also rich in iron.

The treatment of steel dust according to the invention mainly contemplates the feeding of EAF dust and renewable carbon sources, such as charcoal mill, coke fines, anthracite and mineral coal, to produce high quality zinc oxide. As well as steelmaking co-products, such as light mud, heavy mud, iron scale, pre-lime, in addition to yard cleaning of materials also rich in iron, to produce an iron ecosinter suitable for feeding blast furnaces.

The load enters the reactor, initially for the EAF dust, in a ratio of 8 to 20% of carbon sources in relation to the total load of the furnace, where the oxidized zinc is reduced to metallic zinc mainly by the carbon monoxide that is generated in the burning of the carbon source and also by the carbon itself. The following reactions show the reduction of ZnO and FeO and the "Bourdouard" reaction sensitive to temperature and pressure in the load:

*ZnO* + *CO* ↔ *Zn* (*g*) + *CO*2 (*g*)

*CO*2 (*g*) + *C* ↔ 2 *CO* (*g*)

*ZnO* + *C* ↔ *Zn* + *CO* (*g*)

*FeO* + *CO* ↔ *Fe* + *CO*2 (*g*)

*FeO* + C ↔ *Fe* + *CO* (*g*)

*C* + ½ *O*2 (*g*) ↔ *CO*2 (*g*)

After the reduction of zinc, it is volatilized and incorporated into the reactor gas stream, and then, in contact with oxygen, it is again oxidized and precipitated, being recovered in the cyclone and in the bag filter as commercial zinc oxide. In addition to zinc, the elements lead, chlorine, fluorine and other components on a smaller scale are also volatilized and reported to the oxide. Small drags happen, also taking Fe, Ca and C to the oxide. The oxidation reactions of zinc and lead are shown below:

*Zn*(*g*) + ½ *O*2 (*g*) ↔ *ZnO* (*s*)

*Pb*(*g*) + ½ *O*2 *(*g) ↔ *PbO* (*s*)

The end of the zinc and lead oxide production reaction is determined by the control temperature of the reactor furnace or ladle, when it drops below 200°C. Then, what is left in the reactor pot furnace, other steelmaking co-products are added, such as light mud, heavy mud, iron scale, pre-lime, in addition to yard cleaning of materials also rich in iron, to continue the reactions to obtain the ecosinter. Light and heavy mud are generated in the cleaning of gases generated in LD converters, which are basic oxygen steelmaking furnaces. Iron scale is an iron-rich material generated in rolling process. Pre-lime is the material generated in the calcination of limestone, with low CaO content.

In ecosinter production reactions with steelmaking co-products, the reactor pot furnace is also attached to the filter to ensure that the ecosinter is free of heavy metals such as zinc and lead.

According to the process, an iron ecosinter is generated, an important raw material in the pig iron production process.

Table 3 shows the composition of the steelmaking co-products as well as the pre-lime.

Figure 1 shows the production flowsheet of zinc oxide concentrate and commercial ecosinter, where the raw materials, EAF dust and carbon sources and steelmaking co-products, are placed in silos. From there EAF dust and carbon sources are directed to a disc pelletizer (3) so that the raw materials are aggregated and ready for reactions. Then they feed the pot furnace (5), where it receives the burning gas to start the reactions. As the reactions occur, the zinc oxide is vaporized and goes to the cyclone (10) and then to the produced oxide bag filter (11). The final product of zinc oxide concentrate (13) is the mixture between the material produced in the cyclone (10) and retained in the bag filter (11). At the end of the reactions, co-products are fed into the pot furnace, continuing the reactions, obtaining the iron ecosinter (9) in the reactor, to be emptied.

Thus, the present invention deals with the development of an economically viable route for the transformation of these waste zinc ferrites, co-products of steelmaking and steel mill dust, including EAF and powder pastes of low zinc content (class I), light mud, heavy mud, iron scale, pre-lime, in addition to cleaning yard material, in products for the zinc industry and the steel sector. Based on pilot tests, it was possible to obtain a production route for commercial zinc oxide concentrates and iron ecosinter, with elimination and re-disposal of their heavy metal content. The present invention reveals important results for the production of zinc oxide concentrates richer than those produced in a Waelz Kiln, as well as the treatment of low zinc grade EAF dusts, starting from 8% zinc. There is also a reduction in costs and risks with the disposal of this waste, whether in dams or a class I waste storage yard. Instead of costs, the invention turns current expenses and risks of waste disposal into opportunities for environmental and financial gains.

The commercial zinc oxide concentrate, generated by the new process presented in this patent, is ideal for use in zinc smelters worldwide, replacing the conventional processing of Waelz oxide to produce Zinc SHG and its alloys.

SHG zinc is a special quality product (SHG Special High Grade) that contains at least 99.9950% zinc content. This is a commercial product listed on the stock exchange. It can also be used to make alloys with aluminum, magnesium, copper, indium and other metallic elements.

The iron ecosinter from the process results from the mixture of steelmaking co-products, iron ore and other reagents, while still in the pot furnace, which continues in reaction until the zinc content is less than 0.2% or temperature reaches values lower than 200°C, after being poured from the furnace, as a final product for the steel industry.

According to a preferred way of the invention, EAF dust (8 to 22% Zn), coke fines (65 to 85% fixed carbon), mineral coal fines (60 to 75% of fixed carbon), anthracite (80 to 98% of fixed carbon), charcoal mill (40 to 60% of fixed carbon), in addition to co-products of steelmaking as light mud (30 to 50% of iron), heavy mud (70 to 87.5% of Iron), iron scale (60 to 70% of Iron), pre-lime (40 to 70% of CaO), in addition to yard cleaning of materials also rich in iron (above 30% iron).

The raw materials are stored in yards that guarantee storage in silos for the operation. In these silos, the raw materials are dosed on a conveyor belt, directing them to a pelletizing disc which, in turn, promotes homogenization and pelletization of the load.

The material then prepared is fed into a pot furnace. This is fed by air blown upwards through a centrifugal fan. With the increase in temperature, in the range of 850°C to 1,300°C, the process of reduction and volatilization occurs not only of zinc, but also of metals such as lead, chlorine, fluorine and other components on a smaller scale.

Volatilized metals are incorporated into the stream of gases generated in the pot and proceed to the cyclone and bag filter, since there is negative pressure generated by an exhaust fan. There may also be dragging of metals such as iron (Fe), calcium (Ca) and carbon (C).

The gases then generated pass through a cyclone that has a spark arrestor attached to retain high density materials entrained and sparks. The bag filter, on the other hand, has the role of retaining the metals that have volatilized in the form of oxides, generating the zinc oxide concentrate, being the other metals as impurities.

Once this reduction reaction is exhausted and the mentioned metals have volatilized, the steelmaking co-products are added to the pot (light mud, heavy mud, iron scale, pre-lime and yard cleaning materials rich in iron) to finally produce the iron ecosinter. This is then extracted from the pot, as product and raw material for the steel industry in general, especially to produce pig iron.

According to figure 1 attached, the raw materials (01) are stored in silos (02), namely: EAF dust, low zinc content EAF dust, carbon sources (coal dust, coke fines or mineral coal) and steelmaking co-products (light mud, heavy mud, iron scale, pre-lime, yard cleaning materials rich in iron). These are, in turn, dosed and directed to a pelletizing disc (03). The material feeds a pot furnace (04), which has an upward flow of air generated by a centrifugal fan (05). After the reactions, the volatilized product goes to the cyclone (06) and from there to the bag filter (07), which has an exhauster (08) attached, generating the concentrated zinc oxide product (09). At the end of the reactions, after adding all steelmaking co-products, the material to be poured from the pot is named iron ecosinter (10).

The present invention makes it possible to produce concentrates of zinc oxide and iron ecosinter in each steelmarking industrial unit or in its vicinity, without requiring a large production scale, as well as to treat EAF dust, steelmaking co-products (light sludge, slurry heavy, iron scale, pre-lime and cleaning yard material rich in iron) and powder pastes with low zinc contents, which would not be feasible with Waelz Technology. The generated iron ecosinter can be recycled in loco or sold to other steelmakers. All without the need for high Opex and Capex costs, given the simple installations and low energy consumption. The products generated by the present invention have metallic values equal to or greater than those obtained using Waelz Furnaces, including product iron ecosinter, without residues generation. The characteristics of the zinc oxide concentrates produced are high zinc contents, between 55 and 68%, even for low zinc contents (8 to 14%) of steel mill dust. The ecosinter produced by the present invention has commercial iron content greater than 55% Fe, FeO between 5 and 10%, silica (SiO2) lower than 9% and alumina (Al2O3) below 3%. This can be considered an adequate product to feed blast furnaces to produce pig iron.

The characteristics of the zinc oxide concentrates produced are suitable for the zinc industry, having been tested in smelters, which facilitates its commercialization.

Below are examples that are merely illustrative of the scope of the invention, and they should not be taken for its limiting effect.

### Example

The starting point was raw materials that included: EAF dust, coke fines, mineral coal fines, charcoal mill, with components and contents indicated according to tables 1, 2 and 3 shown below. At the end, for the production of sinter, the steelmaking co-products were added, table 3, to obtain ecosinter.

In each test, the raw materials were stored in yards that guarantee storage in silos for the operation. In these silos, the raw materials were dosed on a conveyor belt, directing them to a pelletizing disk which, in turn, promoted homogenization and pelletization of the load, firstly with the EAF dust and then, at the end, with the steelmaking co-products.

The material, then prepared, fed a pot furnace. Then air was blown in ascending flow through a centrifugal fan, and the temperature rise occurred in the range of 850°C to 1,300°C, occurring the process of reduction and volatilization not only of zinc, but also of metals such as lead, chlorine, fluorine and other components on a smaller scale.

The volatilized metals were incorporated into the stream of gases generated in the pot and went to the cyclone and bag filter, since there was negative pressure generated by an exhaust fan, and metals could also have been carried away, such as, among others, iron (Fe), calcium (Ca) and carbon (C).

The gases then generated passed through a cyclone with a spark arrestor attached to retain entrained high-density materials and sparks. The bag filter retained the metals that volatilized in the form of oxides, generating the final zinc oxide concentrate.

The iron sinter remained in the pot. To this were added the steelmaking co-products that were still in reaction for up to 2 hours. Then the ecosinter was poured.

Table 1 shows the components and their respective levels for the first test campaign, with priority being given to feeding with EAF dust with a high zinc content, that is, above 20%:

**Table 1**

| **EAF DUST ANALYSIS - CAMPAIGN 1** | | | | | | | | | | | | | | | | |
|---|---|---|---|---|---|---|---|---|---|---|---|---|---|---|---|---|
| **Identification** | **%SiO2** | **%Al2O3** | **%Fe _{Total}** | **%Mn** | **%CaO** | | **%MgO** | | **%Zn** | | **%K2O** | | **%SO3** | **%PbO** | **%Cl** | **%P2O5** |
| 1 | 2,49 | 0,63 | 39,78 | 1,24 | 3,86 | | 0,87 | | 22,49 | | 0,93 | | 0,13 | 1,62 | 1,52 | 0,05 |
| 2 | 1,51 | 0,45 | 36,61 | 1,19 | 3,64 | | 0,68 | | 24,20 | | 2,03 | | 0,15 | 1,91 | 4,01 | 0,05 |
| 3 | 1,39 | 0,39 | 35,33 | 1,26 | 4,34 | | 0,85 | | 26,15 | | 1,57 | | 0,15 | 1,84 | 3,17 | 0,03 |

| **ECOSINTER PRODUCED- CAMPAIGN 1** | | | | | | | | | | | | | | | | |
|---|---|---|---|---|---|---|---|---|---|---|---|---|---|---|---|---|
| **Identification** | **%SiO2** | **%Al2O3** | **%FeO** | **%Fe _{Total}** | | **%CaO** | | **%MgO** | | **%Mn** | | **%P** | **%Zn** | **%PbO** | **%Cl** | **IB** |
| 3 | 8,76 | 1,42 | 6,00 | 55,76 | | 8,51 | | 0,53 | | 0,59 | | 0,06 | 0,14 | 0,02 | 0,52 | 1,03 |
| 4 | 8,01 | 1,58 | 8,26 | 56,24 | | 8,34 | | 0,45 | | 0,49 | | 0,05 | 0,11 | 0,03 | 0,53 | 1,03 |
| 5 | 8,35 | 1,43 | 6,00 | 56,20 | | 8,05 | | 0,48 | | 0,59 | | 0,05 | 0,15 | 0,03 | 0,34 | 1,03 |
| 6 | 8,13 | 1,36 | 6,00 | 55,76 | | 8,53 | | 0,53 | | 0,58 | | 0,06 | 0,13 | 0,04 | 0,23 | 1,03 |
| 7 | 8,99 | 1,22 | 5,99 | 55,96 | | 8,50 | | 0,42 | | 0,46 | | 0,04 | 0,15 | 0,04 | 0,34 | 0,99 |
| 8 | 8,76 | 1,45 | 5,97 | 55,89 | | 8,40 | | 0,48 | | 0,54 | | 0,05 | 0,16 | 0,03 | 0,43 | 1,01 |
| 9 | 8,92 | 1,71 | 6,10 | 55,62 | | 8,38 | | 0,49 | | 0,56 | | 0,05 | 0,16 | 0,02 | 0,44 | 1,02 |

| **ZINC OXIDE CONCENTRATE PRODUCED - CAMPAIGN 1** | | | | | | | | | | | | | | | | |
|---|---|---|---|---|---|---|---|---|---|---|---|---|---|---|---|---|
| **Identification** | **%SiO2** | **%Al2O3** | **%Fe _{Total}** | **%FeO** | **%CaO** | | **%MgO** | | **%Mn** | | **%K2O** | | **%Zn** | **%PbO** | **%S** | **%Cl** |
| 10 | 0,87 | 0,54 | 1,57 | 0,01 | 1,37 | | 0,12 | | 0,51 | | 6,06 | | 60,96 | 1,59 | 0,08 | 7,93 |
| 11 | 0,27 | 0,97 | 1,02 | 0,01 | 0,26 | | 0,00 | | 0,04 | | 6,76 | | 63,14 | 6,32 | 0,00 | 14,26 |
| 12 | 0,26 | 0,73 | 1,16 | 0,09 | 0,23 | | 0,00 | | 0,05 | | 6,52 | | 61,67 | 7,05 | 0,00 | 13,67 |
| 13 | 0,23 | 0,95 | 1,13 | 0,01 | 0,21 | | 0,00 | | 0,07 | | 6,65 | | 62,79 | 6,53 | 0,00 | 14,55 |

In Table 2, the results of the second test campaign are shown, using PAE with contents lower than 16% of Zn. In table 3 are the chemical compositions of the co-products used in the production of ecosinters.

**Table 2**

| **EAF DUST ANALYSIS - CAMPAIGN 2** | | | | | | | | | | | | | | | | |
|---|---|---|---|---|---|---|---|---|---|---|---|---|---|---|---|---|
| **Identification** | **%SiO2** | **%Al2O3** | **%Fe _{Total}** | **%Mn** | **%CaO** | | **%MgO** | | **%Zn** | | **%K2O** | | **%SO3** | **%PbO** | **%Cl** | **%P2O5** |
| 14 | 3,20 | 2,14 | 37,16 | 0,72 | 9,69 | | 2,10 | | 9,43 | | 1,27 | | 0,000 | 0,57 | 1,96 | 0,243 |
| 15 | 3,02 | 1,95 | 37,50 | 0,77 | 9,05 | | 2,07 | | 10,69 | | 1,19 | | 0,000 | 0,60 | 1,83 | 0,254 |
| 16 | 2,13 | 1,03 | 38,66 | 0,84 | 4,55 | | 1,90 | | 15,32 | | 1,01 | | 0,000 | 0,73 | 1,90 | 0,341 |

| **ECOSINTER PRODUCED- CAMPAIGN 2** | | | | | | | | | | | | | | | | |
|---|---|---|---|---|---|---|---|---|---|---|---|---|---|---|---|---|
| **Identification** | **%SiO2** | **%Al2O3** | **%FeO** | **%Fe _{Total}** | | **%CaO** | | **%MgO** | | **%Mn** | | **%P** | **%Zn** | **%PbO** | **Cl** | **IB** |
| 16 | 8,82 | 1,68 | 6,10 | 55,72 | | 8,36 | | 0,55 | | 0,54 | | 0,05 | 0,10 | 0,04 | 0,54 | 1,01 |
| 17 | 6,39 | 2,31 | 10,20 | 57,39 | | 6,75 | | 0,73 | | 1,03 | | 0,06 | 0,11 | 0,02 | 0,33 | 1,17 |
| 18 | 8,19 | 1,87 | 6,20 | 55,78 | | 8,73 | | 0,47 | | 0,51 | | 0,06 | 0,17 | 0,04 | 0,44 | 1,12 |
| 19 | 8, 43 | 1,86 | 6,30 | 56,78 | | 8,45 | | 0,48 | | 0,57 | | 0,05 | 0,23 | 0,05 | 0,23 | 1,15 |

| **ZINC OXIDE CONCENTRATE PRODUCED- CAMPAIGN 2** | | | | | | | | | | | | | | | | |
|---|---|---|---|---|---|---|---|---|---|---|---|---|---|---|---|---|
| **Identification** | **%SiO2** | **%Al2O3** | **%Fe _{Total}** | **%FeO** | **%CaO** | **%MgO** | **%Mn** | **%K2O** | **%Zn** | **%PbO** | **%S** | **%Cl** | | | | |
| 20 | 0, 45 | 0,76 | 3,56 | - | 0,49 | 0,55 | 0,07 | 2,97 | 68,09 | 1,40 | - | 3,36 | | | | |
| 21 | 0,57 | 0,69 | 3,05 | - | 0,44 | 0,54 | 0,06 | 2,31 | 66,16 | 1,38 | - | 2,03 | | | | |

**Table 3**

| **CO-PRODUCTS USED TO PRODUCE ECOSÍNTER - CAMPAIGNS 1 and 2** | | | | | | | | | | | | |
|---|---|---|---|---|---|---|---|---|---|---|---|---|
| **Identification** | **%SiO2** | **%Al2O3** | **%Fe _{Total}** | **%Mn** | **%CaO** | **%MgO** | **%Zn** | **%K2O** | **%SO3** | **%PbO** | **%Cl** | **%P2O5** |
| Light mud | 0,15 | 0,25 | 46,25 | 1,25 | 8,73 | 2,53 | 0,43 | 0,13 | 0,11 | - | - | 0,09 |
| Heavy mud | 0,23 | 0,18 | 68,15 | 0,15 | 7,66 | 0,77 | 0,15 | 0,25 | 0,13 | - | - | 0,11 |
| Pre-Lime | 1,25 | 1,63 | 1,28 | ≤005 | 67,60 | 16,42 | ≤005 | ≤ 0,20 | 0,54 | - | - | ≤ 0,10 |
| Yard cleaning material | 4,09 | 4,61 | 49,72 | 1,04 | 11,12 | 4,23 | ≤005 | ≤ 0,20 | ≤ 0,20 | ≤ 0,05 | - | ≤ 0,10 |
| Iron Scale | - | - | 68,44 | - | - | - | - | - | - | - | - | - |

## Claims

1. Process for the production of zinc oxide concentrate and iron ecosinter, **characterized by** using zinc ferrites as raw material, Electrical Arc Furnace (EAF) dust, with co-products from steelmaking such as: light mud, heavy mud, iron scale, pre-lime and yard cleaning material rich in iron; mixed with carbon sources and whose mixture is homogenized and pelletized, followed by reduction in a pot furnace fed by insufflated air in ascending flow with temperature ranging from 850°C to 1,300°C; being the volatilized metals and the gases generated sent to a cyclone and bag filter where the zinc oxide is retained; the iron ecosinter being poured from the pot.

2. Process for the production of zinc oxide concentrate and iron ecosinter, according to claim 1, **characterized by** using 8 to 20% of carbon sources in mass in relation to the total load of the furnace.

3. Process for the production of zinc oxide concentrate and ecosinter, according to claim 1, **characterized by** using Electrical Arc Furnace (EAF) dust with 8 to 22% zinc as raw material.

4. Process for the production of zinc oxide concentrate and iron ecosinter, according to claim 1, **characterized in that** it uses as carbon sources: coke fines (65 to 85% fixed carbon), mineral coal fines (60 to 75% fixed carbon), anthracite (80 to 98% fixed carbon), charcoal mill (40 to 60% fixed carbon).

5. Process for the production of zinc oxide concentrate and iron ecosinter, according to claim 1, **characterized in that** it employs the following contents by mass: light slurry steelmaking co-products (30 to 50% iron), heavy mud (70.0 to 87.5% of Iron), iron scale (60 to 70% of Iron), pre-lime (40 to 70% of CaO), in addition to yard cleaning of materials that are also rich in iron (above 30% iron).

6. Process for the production of zinc oxide concentrate and iron ecosinter, according to claim 1, **characterized in that** the raw materials are stored in yards that guarantee storage in silos for the operation, the raw materials are dosed raw materials on a conveyor belt, directing them to a pelletizing disc which, in turn, promotes homogenization and pelletization of the load.

7. Process for the production of zinc oxide concentrate and iron ecosinter, according to claim 1, **characterized in that** during the reduction and volatilization process not only zinc, but also the volatilization of other metals such as lead, chlorine, fluorine and other components on a smaller scale.

8. Process for the production of zinc oxide concentrate and iron ecosinter, according to claim 1, **characterized in that** the bag filter retains the metals that volatilized in the form of oxides, generating the zinc oxide concentrate.

9. Process for the production of zinc oxide concentrate and iron ecosinter, according to claim 1, **characterized by** steelmaking co-products such as: light mud, heavy mud, iron scale, pre-lime and cleaning material rich in iron, to be added to the pot or reactor as soon as the volatilization of the zinc oxide is complete.

10. Process for the production of zinc oxide concentrate and iron ecosinter, according to claim 1, **characterized in that** iron ecosinter is poured from the pot or furnace or reactor.

11. Process for the production of zinc oxide concentrate and iron ecosinter, according to claim 1, **characterized in that** the iron ecosinter obtained has characteristics of commercial iron contents greater than 55% of Fe content and FeO, between 5 and 10 %, silica (SiO2) lower than 9% and alumina (Al2O3) below 3%; and the zinc oxide concentrate obtained at the end of the process has a high zinc content, between 55 and 68%.

12. Product obtained from the process according to any one of the preceding claims, **characterized in that** the iron ecosinter obtained has characteristics of commercial iron content greater than 55% and FeO, between 5 and 10%, silica (SiO2) lower than 9% and alumina (Al2O3) below 3%; and the zinc oxide concentrate obtained at the end of the process has a high zinc content, between 55 and 68%.
